# DEMANDE DE BREVET EUROPEEN

(11) **EP 1 021 958 A1**
(43) Date de publication de la demande: **26.07.2000**
(21) Numéro de dépôt: 99101295.6
(22) Date de dépôt: 25.01.1999
(51) Int. Cl.: A23J 1/00, A23J 1/10, A23J 3/32

(54) **Procédé d'hydrolyse chimique sur des bouillons protéiques, déchets d'origine animale et résidus organiques animaux**

(71) Demandeur: S.I.C.IT. S.p.A., 36072 Chiampo (Vicenza) (IT)
(72) Inventeur: Neresini, Massimo, 36078 Valdagno (Vicenza) (IT); Candido, Manuela Cinzia, 36071 Arzignano (Vincenza) (IT)
(74) Mandataire: Bettello, Pietro, Dott. Ing.

(57) **Abrégé**

Il s'agit d'un procédé d'hydrolyse chimique appliqué à des bouillons protéiques, déchets d'origine animale et résidus organiques animaux, tels que les produits de déchet issus de travaux industriels, agro-industriels ou de l'abattage, afin d'éliminer ou de réduire fortement l'infectiosité par la BSE (encéphalopathie spongiforme bovine), qui comprend une phase d'exécution simultanée d'un traitement d'hydrolyse du déchet d'origine animale ou du bouillon protéique, associé à un traitement thermique sous pression.

## Description

La présente invention concerne un procédé d'hydrolyse chimique selon le préambule de la revendication 1.

Elle se propose de mettre en oeuvre un procédé chimique, par voie acide ou basique, d'hydrolyse poussée sous pression exécuté sur des bouillons protéiques extraits de résidus du travail des peaux tels que les écharnures, les poils, les résidus de refente, résidus de rasage et les rognures, qui permette d'obtenir des mélanges d'acides aminés et de peptides ayant des poids moléculaires maxima inférieurs à 10 000 Dalton et par conséquent propres à être utilisables avec sécurité dans le secteur zootechnique, agricole et industriel, parce qu'on est parvenu à la dégradation des agents infectants tels que, par exemple, le prion de la BSE (encéphalopathie spongiforme bovine).

Ceci est obtenu conformément aux caractéristiques de la partie caractérisante de la revendication 1.

Le procédé selon l'invention peut être avantageusement appliqué aussi à des bouillons protéiques extraits de produits et/ou déchets d'origine animale en général comme, par exemple, les farines de viande, os, cervelles, organes internes et analogues, et il peut aussi être avantageusement appliqué directement aux mêmes déchets non encore traités.

Ce procédé d'hydrolyse poussée de la matière protéique se fonde sur les plus récentes connaissances de la molécule prionique qui détermine la grave et bien connue maladie dite de la "vache folle", ainsi que sur le fait que, comme de récentes études l'ont démontré, même des fragments du même prion d'un poids moléculaire élevé, par exemple de plus de 10 000 Dalton, peuvent d'une certaine façon déterminer une certaine infectiosité.

La méthodologie chimico-physique selon l'invention est constituée par un procédé de travail qui prévoit l'exécution simultanée de deux traitements : l'hydrolyse chimique du déchet d'origine animale ou du bouillon protéique, issu de précédentes opérations d'hydrolyse, (action chimique de rupture des liaisons peptidiques jusqu'à obtenir des mélanges d'acides aminés et de peptides ayant des poids moléculaires moyens inférieurs à 10 000 Dalton) et le traitement thermique sous pression (action chimico-physique de dégradation des structures organico-protéiques).

Ces traitements peuvent être exécutés aussi bien dans des systèmes discontinus ("batch") que dans des systèmes continus, et appliqués, soit à des bouillons, limpides ou troubles issus des opérations de pré-hydrolyse ou d'hydrolyse des déchets d'origine animale soit à des déchets d'origine animale pas encore travaillés et à des produits issus à partir des déchets eux-mêmes.

Le traitement d'hydrolyse chimique sous pression, aussi bien "batch" que continu, peut être exécuté au moyen de l'action d'acides ou de bases, par exemple en utilisant de l'acide sulfurique ou de la chaux hydratée.

Des essais pratiques et des analyses de laboratoire ont démontré qu'une modalité optimale d'exécution du procédé selon l'invention consiste à effectuer une pré-hydrolyse acido-basique suivie, après la phase de filtration des bouillons alcalins, d'un traitement thermique sous pression dans les conditions suivantes :
- température 140°C
- pression 3 bar
- pH 11
- durée 30 minutes

Ce procédé a l'avantage d'opérer sur une solution extrêmement diluée d'acides aminés et de peptides parfaitement dissous dans la solution aqueuse d'un pH > 11, résultat de la phase précédente de traitement alcalin.

En outre, dans l'éventualité de pouvoir opérer directement sur des déchets, par exemple de l'écharnure préalablement broyée et dégraissée, on peut avantageusement assurer au résidu non dissous, par exemple au sulfate de calcium résultant de l'opération, après une filtration, la possibilité d'être utilisé dans le secteur agricole avec la garantie d'avoir été traité par un processus d'hydrolyse poussée et par conséquent devenu non infecté par les prions, y compris par le prion bien connu de la BSE.

Le procédé d'hydrolyse chimique sous pression ou "poussée" appliqué à des bouillons protéiques ou à des déchets d'origine animale afin d'obtenir des mélanges d'acides aminés et de peptides exempts de l'infectiosité du prion de la BSE est mieux défini dans la suite par la description de deux exemples pratiques et avec l'aide des planches de dessin annexées où :
la Fig. 1 représente le schéma d'un traitement d'hydrolyse poussée par utilisation de réacteurs "batch";
la Fig. 2 représente le schéma d'un traitement d'hydrolyse poussée en continu.

### EXEMPLE 1

On décrit un procédé d'hydrolyse avec traitement thermique poussé dans des conditions « batch » sur des bouillons, issus de la filtration du liquide trouble alcalin par la chaux, du produit dénommé "écharnure" composé de résidus de tissus conjonctifs et adipeux enlevés sur le côté chair des peaux par une machine dite écharneuse, après l'opération d'épilage et avant le tannage.

Le type d'écharnure traité est un déchet d'origine animale qui présente la composition moyenne suivante :
- eau 75 à 85 %
- protéine animale 5 à 10 %
- graisse animale 7 à 14 %
- sels divers 2 à 6 %

Ce déchet, prélevé dans les tanneries, est tout d'abord déposé dans une cuve d'accumulation appropriée, puis broyé afin d'obtenir une matière homogène dont la dimension maximum est de l'ordre de quelques millimètres (la chaux contenue dans l'écharnure elle-même facilite cette opération de broyage parce qu'elle agit en tant que désagrégeant sur la matière protéique, même à la température ambiante).

Le produit écharnure ainsi haché, est ensuite traité à chaud avec de l'acide sulfurique d'un pH < 2 pendant environ 4 à 6 heures, afin d'obtenir la pré-désagrégation acide des protéines et la séparation des graisses contenues dans le produit en cours. Ces graisses sont ensuite séparées du reste du produit et envoyées à une installation de raffinage.

Le produit restant, c'est-à-dire la matière digraissée, est à son tour traitée à chaud avec de la chaux d'un pH > 11, afin d'obtenir la précipitation du sulfate de calcium et la saponification des graisses résiduelles.

Le liquide trouble alcalin traité qui est produit est ensuite filtré, de sorte qu'on obtient un bouillon protéique-calcique limpide à un pH > 11, qui est ensuite accumulé dans des citernes appropriées dans l'attente de subir la phase ultérieure de traitement thermique poussé, conforme à l'invention.

Pour augmenter l'effet du traitement thermique selon l'invention, le bouillon peut être ultérieurement additionné de chaux, de soude ou d'une autre base afin d'assurer un traitement alcalin plus énergique.

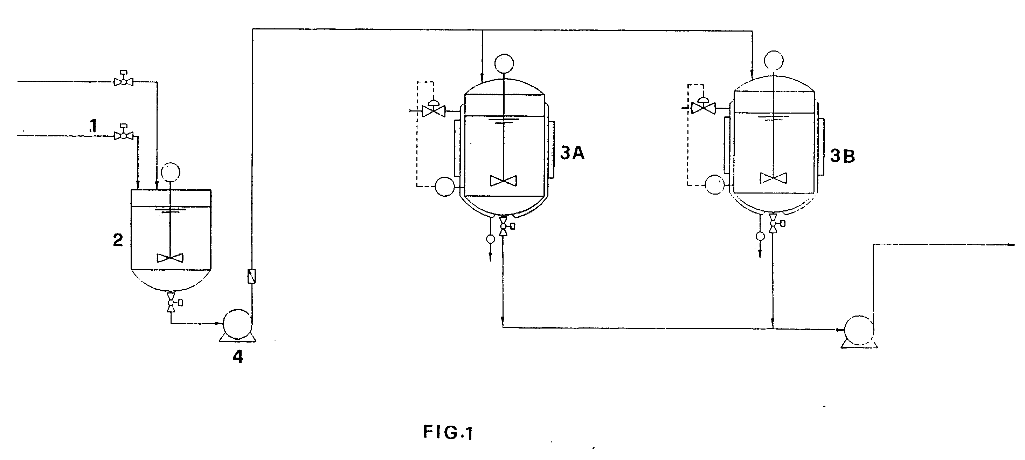

Comme ceci est visible sur la Fig. 1, le bouillon alcalin 1, obtenu avec le procédé décrit plus haut, de type connu en soi, est contenu dans un mélangeur 2 où il peut être ultérieurement additionné de lait de chaux, de soude ou d'une autre base afin de garantir l'efficacité du traitement thermique poussé suivant, qui se réalise dans des réacteurs "batch " 3.

Ces réacteurs 3 sont constitués par des appareils en acier inoxydable ou en une autre matière et ils sont complétés d'un agitateur et de moyens de chauffage tels que des demi-tubes ou des chemises de chauffage à la vapeur.

Le bouillon 1 est chargé dans les réacteurs 3 au moyen d'une pompe centrifuge 4 et, ensuite, lorsque toutes les vannes du réacteur ont été fermées, on procède à la phase de chauffage indirect à la vapeur sous contrôle automatique.

La durée de cette phase de traitement est d'environ 6 heures réparties en 2 heures pour le chauffage, 30 minutes pour le traitement d'analyse poussée proprement dit, 2,5 heures de refroidissement, et le reste pour les nécessaires opérations de déchargement du produit traité du réacteur.

Le bouillon ainsi traité est ensuite ultérieurement filtré, ainsi qu'éventuellement traité afin d'éliminer les sels qui y sont contenus ; en particulier, on peut éliminer uniquement le calcium, ou encore on peut pousser le traitement de déminéralisation jusqu'à l'élimination totale des sels inorganiques dissous.

Le bouillon ainsi produit est ensuite concentré jusqu'à obtenir un liquide dense et visqueux, de couleur ambrée, d'une teneur en extrait sec de jusqu'à 65-70 % et d'une teneur en acides aminés et peptides, comptée sur l'extrait sec, de jusqu'à 100 %.

Le produit concentré qui est obtenu à la fin dû traitement est analysé pour le caractériser exactement sous l'aspect de ses propriétés physico-chimiques.

### EXEMPLE 2

On décrit un procédé d'hydrolyse avec traitement thermique poussé en continu exécuté sur un bouillon d'écharnure, du type décrit dans l'exemple précédent, mais qui vaut pour tout type de bouillon dérivant de n'importe quel procédé de prédissolution de protéines animales telles que les plumes, les farines de viande en suspension ou dissoutes, les déchets d'origine animale en général, en milieu acide, par exemple avec de l'acide sulfurique.

Egalement dans ce cas, le bouillon peut être additionné d'une base ou d'un acide en portant le pH à une valeur précise, ou simplement en calculant la quantité en excès afin de pouvoir obtenir un résultat précis dans le traitement thermique poussé suivant.

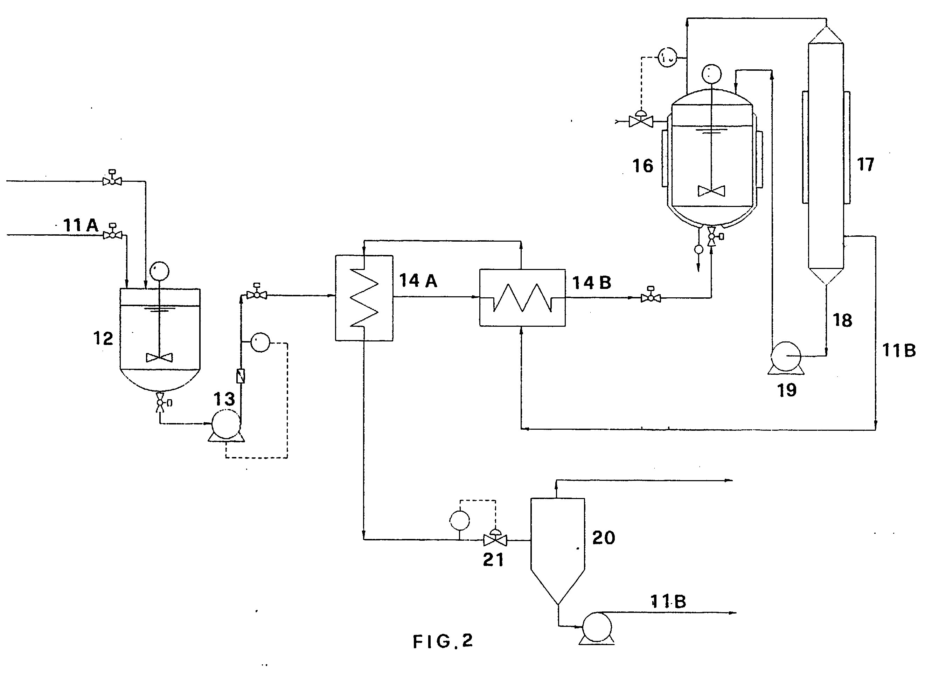

Comme on le voit en se reportant à la Fig. 2, le bouillon d'entrée 11A, provenant de réservoirs de stockage, va alimenter un récipient de mélange 12 dans lequel est ajoutée en continu, en fonction du débit du bouillon précité, une solution d'acide sulfurique dilué à 50 % en poids.

Le bouillon ainsi acidifié est ensuite envoyé, au moyen d'une pompe centrifuge 13, à un ou plusieurs échangeurs de chaleur 14, dans lesquels est récupérée une partie de la chaleur que le bouillon 11B possède à la sortie du traitement thermique poussé.

Ceci est possible parce que le bouillon d'entrée a une température de 60-70°C tandis que le bouillon à la sortie du traitement a une température de 140-160°C.

La pompe 13 est un composant décrit de l'installation parce qu'elle doit assurer une pression d'environ 3-10 bars dans toutes les phases du traitement, pour éviter l'ébullition de la masse acide en cours de travail.

A la sortie des échangeurs de chaleur 14, le bouillon entre dans le réacteur 16 où il est chauffé, jusqu'à une température variable, entre 100 et 200°C ; plus précisément, dans le traitement du bouillon en question, cette température est de 140°C.

La chaleur apportée au réacteur 16 est fournie par chauffage indirect à la vapeur et sous un contrôle constant et automatique de la température.

Ensuite, le bouillon acide chauffé est envoyé à une colonne 17.

Dans chacun des deux appareils 16 et 17 précités, on respecte un temps prédéterminé de traitement thermique poussé.

Plus précisément, dans le traitement du bouillon en question, ce temps de traitement thermique poussé (Ttts) est de 30 minutes, contre un temps réel du traitement complet de 70-90 minutes, en ce sens qu'on doit tenir compte du mouvement du liquide dans la colonne et dans le réacteur, entièrement mélangé, ainsi que du rapport entre le volume des deux appareils 16, 17 et du débit du bouillon acide.

Le précipité 18, qui se forme éventuellement pendant le traitement, est recyclé en continu dans le réacteur 16 à travers la pompe 19 et il sera évacué à la fin du traitement.

Dans le cas d'un traitement thermique poussé en phase alcaline avec de la chaux, la pompe 19 a pour fonction de recycler dans le réacteur 16 la chaux qui n'a pas été consommée dans la phase de traitement en colonne.

Le bouillon 11B sortant de la colonne 17 est envoyé aux échangeurs 14 ou, comme décrit précédemment, il cède une partie de sa chaleur.

Ensuite, le bouillon 11B entre dans un réservoir suivant 20, après avoir préalablement subi une action dite de "flash" sous l'effet d'une vanne 21, placée en amont du réservoir précité.

A la fin, le bouillon 11B, traité par le procédé selon l'invention, et qui possède les caractéristiques de non infectiosité, est envoyé aux phases suivantes de travail par lesquelles il est purifié et déminéralisé jusqu'au degré de pureté voulu.

## Revendications

1. Procédé d'hydrolyse chimique appliqué à des bouillons protéiques, déchets d'origine animale et résidus organiques animaux tels que les produits de déchet issus de traitements industriels, agro-industriels, ou de l'abattage, afin d'éliminer ou de réduire fortement l'infectiosité par la BSE (encéphalopathie spongiforme bovine) ou due à d'autres prions, pour obtenir un autre produit final qui peut être utilisé avec sécurité comme aliment simple, aliment composé, produits divers pour la zootechnique, dans l'industrie pharmaceutique et cosmétique, en agriculture et dans d'autres domaines industriels, ledit procédé étant caractérisé en ce qu'il comprend une phase d'exécution simultanée d'un traitement d'hydrolyse du déchet d'origine animale ou du bouillon protéique, associé à un traitement thermique sous pression.

2. Procédé selon la revendication 1, caractérisé par le fait que le traitement d'hydrolyse du déchet d'origine animale ou du bouillon protéique comprend un processus d'hydrolyse chimique avec des acides du type de l'acide sulfurique, de l'acide chlorhydrique et analogue, ou avec des bases, telles que la chaux, la soude et analogues, ledit procédé ayant pour but de provoquer une action chimique de rupture des liaisons peptidiques jusqu'à obtenir des mélanges d'acides aminés et de peptides ayant des poids moléculaires inférieurs à 10 000 Dalton.

3. Procédé selon la revendication 1 ou 2, caractérisé par le fait que le traitement thermique sous pression est réalisé à une température supérieure à 100°C et à une pression supérieure à 1,5 bar, de manière à provoquer une action de dégradation des structures organo-protéiques.

4. Procédé selon la revendication 3, caractérisé par le fait que le traitement thermique sous pression se déroule à une température de 140°C, sous une pression de 3,0 bar, à un pH d'au moins 11 et pendant une durée d'au moins 30 minutes.

5. Procédé selon l'une quelconque des revendications précédentes, caractérisé par le fait que le traitement thermique sous pression se déroule dans des conditions "batch".

6. Procédé selon la revendication 5, caractérisé par le fait que le traitement thermique sous pression, qui se déroule dans des conditions "batch" s'effectue avec une installation où le bouillon alcalin ou acide (1) est additionné, au moyen d'un mélangeur (2), de lait de chaux, de soude ou d'une autre base, ou d'acide sulfurique ou d'un autre acide avant d'être placé dans le réacteur "batch" (3) pour une phase de chauffage indirect à la vapeur et avec contrôle automatique de la température.

7. Procédé selon l'une quelconque des revendications 1 à 4, caractérisé par le fait que le traitement thermique sous pression se déroule en continu.

8. Procédé selon la revendication 7, caractérisé par le fait que le traitement thermique sous pression qui se déroule en continu, s'effectue avec une installation où l'on ajoute en continu au bouillon (11A), au moyen d'un mélangeur (12), une solution d'acides ou de bases en fonction du débit dudit bouillon, le bouillon acide ou alcalin ainsi obtenu entrant dans les échangeurs de chaleur (14) où l'on récupère une partie de la chaleur possédée par ledit bouillon (11B) à la sortie dudit traitement, le bouillon étant porté, dans lesdits échangeurs de chaleur, à une température comprise entre 100°C-200°C, le bouillon chauffé passant, toujours à la suite, à travers un réacteur (16) et une colonne (17) qui y fait suite, la durée de traitement thermique poussé (Ttts) dans les deux appareils précités étant d'au moins 1 minute, le bouillon ainsi traité subissant, encore ensuite, une action de "flash' exécutée au moyen d'une vanne (21) placée en amont du réservoir (20) de collecte du produit final, constitué par un bouillon protéique ayant des propriétés de non infectiosité par des plions.

9. Procédé selon la revendication 8, caractérisé par le fait de prévoir que, dans l'installation pour le déroulement du traitement thermique en continu, est montée une pompe centrifuge (13) apte à maintenir une pression supérieure à 3 bar dans toutes les phases de travail.

10. Procédé selon la revendication 8, caractérisé par le fait qu'au moyen d'une pompe (19), le précipité (18) qui se forme éventuellement pendant le traitement thermique sous pression est recyclé dans le réacteur et évacué à la fin du traitement.

11. Procédé selon une ou plusieurs des revendications précédentes, caractérisé par le fait que, dans le traitement thermique en phase alcaline, la chaux qui n'est pas consommée dans la colonne (17) est recyclée dans le réacteur (16), au moyen d'une pompe (19).

12. Procédé selon une ou plusieurs des revendications précédentes, caractérisé en ce que le bouillon, avant d'être soumis au traitement thermique poussé, peut être ultérieurement additionné de chaux, de soude ou d'une autre base et d'acide sulfurique ou d'un autre acide afin de garantir un traitement alcalin plus énergique.
